Europäisches Patentamt

European Patent Office

Office européen des brevets

(11) Veröffentlichungsnummer: **0 463 426 A1**

## EUROPÄISCHE PATENTANMELDUNG

(21) Anmeldenummer: **91109256.7**

(22) Anmeldetag: **06.06.91**

(51) Int. Cl.⁵: **F16D 3/84**, F16J 3/04

(30) Priorität: **27.06.90 DE 4020403**

(43) Veröffentlichungstag der Anmeldung:
**02.01.92 Patentblatt 92/01**

(84) Benannte Vertragsstaaten:
**DE FR GB IT**

(71) Anmelder: **Continental Aktiengesellschaft
Königsworther Platz 1, Postfach 1 69
W-3000 Hannover 1(DE)**

(72) Erfinder: **Teichfischer, Günther
Kapellenstrasse 11
W-3132 Clenze(DE)**
Erfinder: **Liebich, Charl
Schaafhausen Nr. 22
W 3138 Dannenberg(DE)**

(54) **Faltenbalg.**

㉞ Die Erfindung betrifft, insbesondere durch Blasformung hergestellte, Faltenbälge. Zur Verbesserung ihrer Flexibilität weisen diese Faltenbälge an ihren axial inneren Faltungen (4) Entlastungsnuten (5) mit Hinterschneidungen bildenden Längsschnittkonturen auf.

FIG. 1

Die Erfindung betrifft einen Faltenbalg gemäß dem Oberbegriff des Patentanspruchs 1.

Derartige Faltenbälge, die vorteilhaft durch Blasformen in einer ihre Außenkontur bestimmenden Innenform aus schlauchförmigen Rohlingen hergestellt werden, sind beispielsweise aus der DE-OS 34 17 708 bekannt. Sie werden in großem Umfang zur Kapselung von homokinetischen Gelenken - insbesondere an Kraftfahrzeugantriebs-Gelenkwellen - eingesetzt und unterliegen bei ihrer bestimmungsgemäßen Verwendung extremen mechanischen Anforderungen, die eine hohe Biegeelastizität aller ihrer Wandungsteile in einem weiten Temperaturbereich voraussetzen. Dabei kommt im Hinblick auf die ständigen Dehnungs- und Stauchungs-Vorgänge in der Balgwandung deren Elastizität, insbesondere in den Scheiteln ihrer umlaufenden Faltungsbereiche, eine entscheidende Bedeutung zu.

Bei den aus der obengenannten DE-OS 34 17 708 bekannten Faltenbälgen wurde dieser Tatsache u.a. dadurch Rechnung getragen, daß die radial inneren Faltungsbereiche Entlastungsnuten mit etwa U-förmigem Querschnitt aufwiesen, die nach Art von sogenannten Folienscharnieren wirkten und dadurch zu einer graduellen Verbesserung des dynamischen Biegeverhaltens solcher Bälge beitrugen.

Angesichts der inzwischen besonders im Automobilbau weiter gestiegenen Anforderungen bezüglich dynamischer Belastbarkeit, Funktionssicherheit und Gebrauchsdauer aller funktionswesentlichen Teile stellte sich die Aufgabe, auch leistungsfähigere Faltenbälge, insbesondere zur Verwendung als Achsmanschetten für Kraftfahrzeug-Antriebswellen, bereitzustellen und dabei - abgesehen von der Auswahl optimaler Werkstoffe - auch die konstruktive Gestaltung der Bälge weiter zu optimieren.

Diese Aufgabe wird durch einen Faltenbalg der eingangs genannten Art gelöst, der die im kennzeichnenden Teil des Patentanspruchs 1 angegebenen Merkmale aufweist.

Durch die erfindungsgemäße Gestaltung der Entlastungsnuten der inneren umlaufenden Faltungsbereiche wird die Balgwandung in diesen Bereichen flächenmäßig vergrößert, und die beim bestimmungsgemäßen Einsatz der Bälge ständig auftretenden alternierenden Dehnungen und Stauchungen führen nicht zu Spannungsspitzen im Faltungsscheitel, sondern verteilen sich gleichmäßig über einen größeren Bereich, wodurch nicht nur die für die Verformungen des Balges erforderlichen Kräfte vermindert, sondern auch das Auftreten von Knickbrüchen verhindert wird. Ferner führt die erfindungsgemäße Ausführung der inneren Faltungsbereiche bei dem zur Herstellung derartiger Faltenbälge bevorzugten Blasformverfahren zu einer erwünschten Verdünnung der Wandstärken in den inneren Faltungsbereichen, die einen weiteren entscheidenden Beitrag zur Erhöhung der Flexibilität dieser Bereiche liefert. Das der Erfindung entgegenstehende fachmännische Vorurteil, die Hinterschneidungen bildende Kontur der erfindungsgemäßen Entlastungsnuten könnte nach abgeschlossenem Formungsvorgang die Entformung entscheidend behindern, hat sich in der Praxis als unbegründet erwiesen.

Neben einer konstant gekrümmten - insbesondere 2/3-Kreis- bis 3/4-Kreis-förmigen - Längsschnittkontur der Entlastungsnuten haben tropfenförmige und elliptische Konturen besonders gute Gebrauchseigenschaften der Faltenbälge ergeben. Ferner kann die Längsschnittkontur der Entlastungsnuten im Rahmen der vorliegenden Erfindung polygonförmig - insbesondere trapezförmig - ausgeführt werden. Allen erfindungsgemäßen Ausführungsformen ist gemeinsam, daß die Entlastungsnuten - ausgehend vom Nutengrund - mit wachsendem Abstand zur Mittelachse der Faltenmanschette sich zunächst axial erweitern und dann verengen, so daß ihre Längsschnitt-Konturen Hinterschneidungen aufweisen.

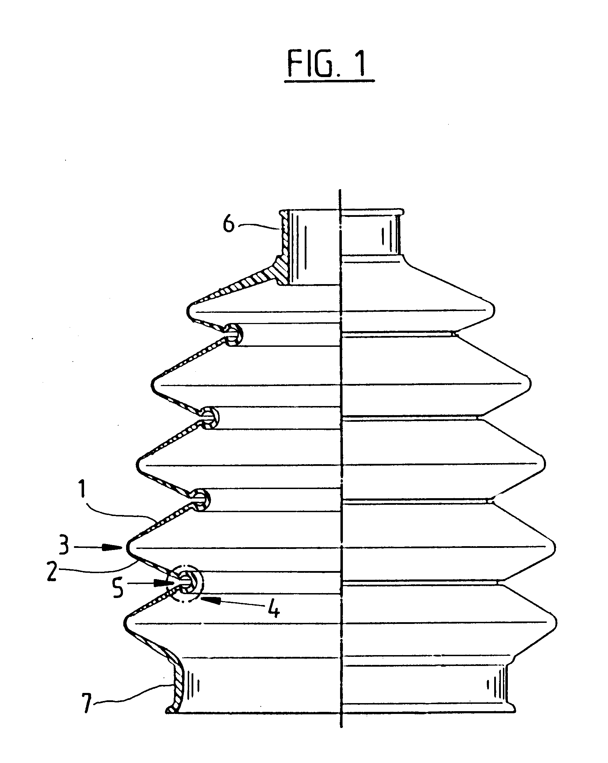

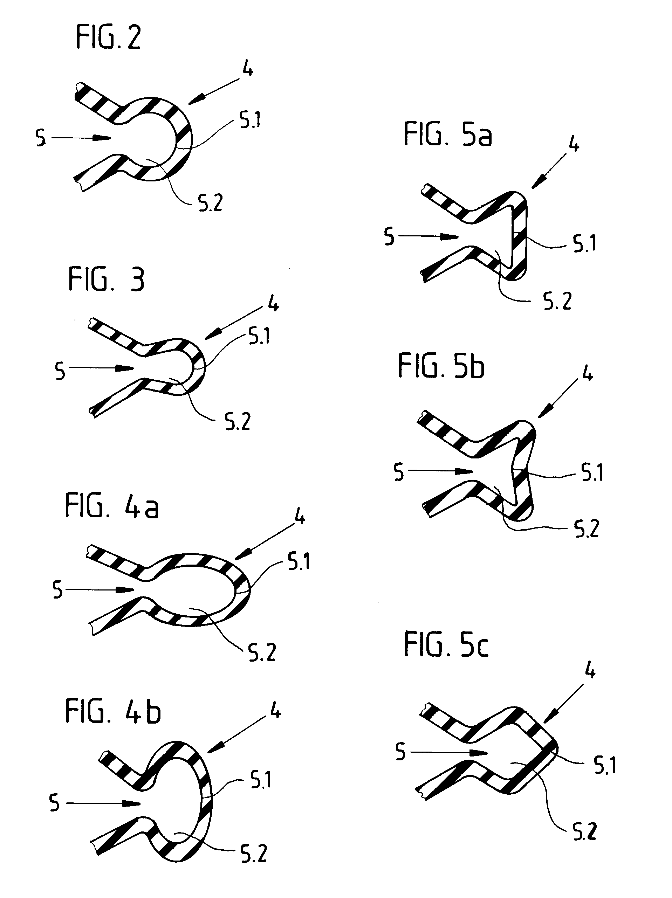

Die beigefügte Zeichnung veranschaulicht die Erfindung, und zwar zeigt Fig. 1 einen erfindungsgemäßen Faltenbalg in Form einer Achsmanschette, die in der rechten Bildhälfte in der Seitenansicht und in der linken Bildhälfte im axialen Längsschnitt dargestellt ist. Die Fig. 2 bis 5 geben in vergrößerter Darstellung erfindungsgemäße Varianten der mit Hinterschnitten ausgeführten Entlastungsnuten wieder.

Der in Fig. 1 dargestellte erfindungsgemäße Faltenbalg besitzt an seinen axialen Enden Befestigungsbunde 6 und 7, an denen er mittels geeigneter Spannbänder od. dgl. auf den Mantelflächen zweier winkelbeweglich miteinander verbundener Wellenteile fixierbar ist. Seine Außenkontur ist durch die in abwechselnder axialer Ausrichtung angeordneten hohlkegelförmigen Wandungsteile 1 und 2 bestimmt, die durch äußere Faltungsbereiche 3 und innere Faltungsbereiche 4 miteinander verbunden sind. Die inneren Faltungsbereiche 4 weisen Entlastungsnuten 5 auf, die erfindungsgemäß mit Hinterschneidungen ausgeführt sind.

Wie die in den Fig. 2 bis 5 vergrößert wiedergegebenen Längsschnitte erfindungsgemäßer an den inneren Faltungsbereichen 4 angebrachter Entlastungsnuten 5 deutlich machen, ist jede dieser umlaufenden Nuten so ausgeführt, daß sie sich - ausgehend vom Nutengrund 5.1 - zunächst in der axialen Richtung des Faltenbalges symmetrisch erweitert und dann wieder verengt, wodurch sich eine Hinterschneidung 5.2 ergibt, die überraschenderweise bei der Herstellung der erfindungsgemäßen Faltenbälge nicht zu Entformungsschwierigkeiten führt. Während Fig. 2 eine konstant gekrümmte, etwa 3/4-Kreis-förmige Längsschnittkontur der Entlastungsnut 5 zeigt, ist in Fig. 3 eine aufgrund praktischer Bewährung bevorzugte tropfenförmige Kontur wiedergegeben, und in den Fig. 4a und 4b sind elliptische Ausführungsformen dargestellt. Fig. 5a zeigt eine erfindungsgemäße Entlastungsnut 5 mit trapezförmiger Längsschnittkontur, während die Fig. 5b und 5c weitere im Rahmen der vorliegenden Erfindung liegende polygonale Längsschnittkonturen wiedergeben.

## Patentansprüche

1. Faltenbalg aus plastomerem oder elastomerem Werkstoff, der in abwechselnder axialer Ausrichtung angeordnete hohlkegelförmige Wandungsteile (1, 2) aufweist, die durch äußere bzw. innere umlaufende Faltungsbereiche (3, 4) miteinander verbunden sind, wobei die inneren Faltungsbereiche (4) jeweils eine Entlastungsnut (5) aufweisen, **dadurch gekennzeichnet,** daß die Entlastungsnuten (5) - im axialen Längsschnitt des Faltenbalges gesehen - eine mit wachsendem Abstand zur Mittelachse (A) des Faltenbalges zunächst axial erweiternde und dann verengende, eine Hinterschneidung (5.2) bildende Längsschnittkontur aufweisen.

2. Faltenbalg nach Anspruch 1, dadurch gekennzeichnet, daß die Entlastungsnuten (5) eine konstant gekrümmte Längsschnittkontur - insbesondere in Form eines Zweidrittel- bis Dreiviertel-Kreises - aufweisen.

3. Faltenbalg nach Anspruch 1, dadurch gekennzeichnet, daß die Entlastungsnuten (5) eine tropfenförmige Längsschnittkontur aufweisen.

4. Faltenbalg nach Anspruch 1, dadurch gekennzeichnet, daß die Entlastungsnuten (5) eine ovale - insbesondere elliptische - Längsschnittkontur aufweisen.

5. Faltenbalg nach Anspruch 1, dadurch gekennzeichnet, daß die Entlastungsnuten (5) eine polygonförmige - insbesondere trapezförmige - Längsschnittkontur aufweisen.

# FIG. 1

FIG. 2

FIG. 3

FIG. 4a

FIG. 4 b

FIG. 5a

FIG. 5b

FIG. 5c

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 417 708 (FELDMÜHLE) <br> * Abbildung 2 * <br> – – – | 1 | F 16 D 3/84 <br> F 16 J 3/04 |
| P,A | EP-A-0 389 099 (WYNN'S PRECISION INC) <br> * Abbildung 3 * <br> – – – | 1 | |
| A | DE-A-2 845 243 (AUDI NSU) <br> * Abbildungen * <br> – – – | 1 | |
| A | FR-A-1 226 861 (BIRFIELD) <br> – – – – – | 1 | |

| RECHERCHIERTE SACHGEBIETE (Int. Cl.5) |
|---|
| F 16 D <br> F 16 J |

**Der vorliegende Recherchenbericht wurde für alle Patentansprüche erstellt**

| Recherchenort | Abschlußdatum der Recherche | Prüfer |
|---|---|---|
| Den Haag | 09 September 91 | ORTHLIEB CH.E. |